# EUROPEAN PATENT APPLICATION

(11) **EP 1 768 415 A1**
(43) Date of publication of application: **28.03.2007**
(21) Application number: 05021038.4
(22) Date of filing: 27.09.2005
(51) Int. Cl.: H04N 7/26, H04N 7/50, H04N 7/32

(54) **Adaptive scan order of DCT coefficients and its signaling**

(71) Applicant: MATSUSHITA ELECTRIC INDUSTRIAL CO., LTD., Kadoma-shi, Osaka 571-8501 (JP)
(72) Inventor: Wedi, Thomas, Dr., 64823 Gross-Umstadt (DE); Schuur, Bernhard, 55128 Mainz (DE); Kondo, Satoshi, Dr., Yamata Kyoto, 614-8361 (JP)
(74) Representative: Grünecker, Kinkeldey, Stockmair & Schwanhäusser Anwaltssozietät

(57) **Abstract**

The present application relates to encoding and decoding of video data with improved coding efficiency. After transforming pixel data into the frequency domain, only a predetermined subset of transform coefficients is scanned and encoded. In this way, prior knowledge about the location of regular-zero transform coefficients can be exploited so as to reduce redundancies in the coded video data. Information about the location of regular-zero coefficients can be signaled either explicitly or implicitly to the decoder. The decoder decodes the subset of transform coefficients, employs the signaled information about the location of regular-zero coefficients to inverse scan the decoded transform coefficients, and inverse transforms the transform coefficients back into a block of pixels.

## Description

The present invention relates to the compression of video data. Particularly, the present invention relates to a method for compressing and decompressing video data with improved coding efficiency and a corresponding encoder and decoder.

### BACKGROUND OF THE INVENTION

Video data is being adopted in increasing numbers of applications, ranging from video-telephoning and video-conferencing to DVD and digital television. When video data is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

The encoding approach underlying most of these standards consists of the following main stages:
(a) Dividing each individual video frame into blocks of pixels in order to subject each video frame to data compression at a block level.
(b) Decorrelating spatial information of a video frame by transforming each block of video data from the spatial domain into the frequency domain.
(c) Reducing the overall amount of data by quantizing the resulting transform coefficients.
(d) Compressing the remaining data by entropy encoding the quantized transform coefficients.
(e) Exploiting temporal dependencies between blocks of subsequent frames in order to only transmit changes between subsequent frames. This is accomplished by employing a motion estimation/compensation technique.

It is a particular approach of current video coding standards that the image information is transformed from the spatial domain into the frequency domain. Image compression is achieved by representing the image content by only a few frequency components. A natural image content is mostly concentrated in the coefficients of the lower frequency domain. Higher frequency parts, for which the human eye is less sensitive anyway, can thus be removed or quantized in order to lower the amount of data to be coded.

Current video coding standards like MPEG-1, MPEG-2, MPEG-4, H.263 and H.264/AVC use entropy coding to compress the remaining frequency data.

This step comprises scanning the two-dimensional block of quantized transform coefficients in order to convert it to a one-dimensional sequence. Usually a predetermined scan such as the zigzag scan is applied. This scan starts at the lowest frequency coefficient, i.e. the DC-coefficient and is aborted as soon as all non-zero coefficients of the block are scanned. One disadvantage of such a scan is that a lot of zero coefficients are scanned before the last non-zero coefficient is reached.

The thus obtained one dimensional sequence of quantized transform coefficients is compressed to a series of number pairs called run levels. This sequence is coded with binary code words of variable length, based for example on a Huffman code. The code is optimized to assign shorter code words to the most frequent run-level pairs occurring in typical video images. In this way, the entire block of quantized transform coefficients will be encoded.

In many applications, the volume or bandwidth available for storing or transmitting encoded video data is seriously restricted. There is thus the urgent need to compress the video data as far as possible. However, increasing data compression rate by reducing the amount of data by quantizing even more coarsely, inevitably leads to a deterioration of image quality.

### SUMMARY OF THE INVENTION

The aim of the present invention is to provide a method for compressing and decompressing video data with improved data compression rate and image quality.

This is achieved by the features as set forth in the independent claims.

Preferred embodiments are the subject matter of dependent claims.

The conventional method for video data compression is disadvantageous in situations where some of the transform coefficients are zero for several blocks of a video image or are known to be zero for certain reasons. Reasons for these so-called "regular-zero coefficients" can be similarities in motion or in spatial frequency characteristics of several blocks or a specific type of quantization that forces a regular-zero coefficient structure. The conventional coding scheme cannot account for regular-zero coefficients because the entire block of quantized transform coefficients is encoded in any case, including regular and non-regular zero coefficients. Hence, regular-zero coefficients cause redundancy within the coded video signal rendering coding efficiency suboptimal.

It is the particular approach of the present invention to exploit any form of prior knowledge on the transform coefficients by excluding those coefficients that are known to be zero from the scan so as to reduce redundancy within the encoded data and to improve coding efficiency. The remaining coefficients are scanned in a predetermined sequence, resulting in a shorter scan and improved coding efficiency. Information on the scanned coefficients is signaled either explicitly or implicitly to the decoder. The decoder is thus aware of the excluded coefficients and substitutes the non-encoded transform coefficients by predetermined transform values upon performing the inverse transformation.

According to a first aspect of the present invention, a method for encoding video data is provided. The method transforms pixels of an image area into transform coefficients in the frequency domain, scans a predetermined subset of transform coefficients and encodes the scanned transform coefficients. In this way, prior knowledge on the result of the transformation is exploited to improve coding efficiency.

According to a further aspect of the present invention, an encoding apparatus for encoding video data of an input image is provided. The encoding apparatus comprises a transformer for transforming pixels of an image area into transform coefficients in the frequency domain, a scanner for scanning a predetermined subset of transform coefficients, and an encoder for encoding the scanned transform coefficients. In this way, prior knowledge on the result of the transformation can be exploited to improve coding efficiency.

According to a further aspect of the present invention, a method for decoding video data is provided. The method decodes encoded transform coefficients, inverse scans decoded transform coefficients into a two-dimensional array of transform coefficients, and inverse transforms the two-dimensional array of transform coefficients from the frequency domain into pixels of an image area. The decoded transform coefficients form a subset of the two-dimensional array of transform coefficients. Hence, the method complements the two-dimensional array of transform coefficients with a predetermined transform value.

According to a further aspect of the present invention, a decoding apparatus for decoding video data is provided. The decoding apparatus comprises a decoder for decoding encoded transform coefficients, an inverse scanner for inverse scanning decoded transform coefficients into a two-dimensional array of transform coefficients, and an inverse transformer for inverse transforming the two-dimensional array of transform coefficients from the frequency domain into pixels of an image area. The decoded transform coefficients form a subset of the two-dimensional array of transform coefficients. Hence, the decoding apparatus further comprises a complementing means for complementing the two-dimensional array of transform coefficients with a predetermined transform value.

Preferably, the transform coefficients are divided into a predefined plurality of segments and the predetermined subset of transform coefficients is set according to a predetermined subset of the plurality of segments. In this way, the predetermined subset of transform coefficients can easily be referred to by identifying the set of predefined segments that make up the predetermined subset of transform coefficients.

Preferably, the predetermined subset of transform coefficients is altered according to a predefined sequence of subsets of transform coefficients. Preferably, the predetermined subset of transform coefficients is altered from frame to frame, from field to field, or from image area to image according to a predefined sequence of subsets of transform coefficients. Thus, coding efficiency can be maximized because no additional signaling information has to be transmitted to the decoder.

Preferably, the predefined sequence of subsets of transform coefficients is signaled to the decoder. The encoder thus may choose a particular sequence and inform the decoder on its choice so that the decoder is able to decode the encoded video data.

Preferably, restarts of the predefined sequence of subsets of transform coefficients are signaled to the decoder. In this manner, the decoder can react to sudden changes of the image properties.

Preferably, the predefined sequence of subsets of transform coefficients is restarted whenever a predetermined type of frame is encoded or decoded. In this way, frame type information, such as I-frames, can be used to signal the restart of the sequence implicitly.

Preferably, information on the predetermined subset of transform coefficients is signaled to the decoder. This information preferably defines the transform coefficients and the order in which the transform coefficients have been encoded in the video data. This allows the decoder to identify the subset of transform coefficients, to reconstruct the effective scan employed by the encoder, and decode the encoded video data.

Preferably, the signaling information consists of an enumeration of transform coefficients that are or that are not part of the predetermined subset of transform coefficients. The decoder can thus easily reconstruct the effective scan employed by the encoder and decode the encoded video data.

Preferably, the transform coefficients are divided into a predefined plurality of segments and the signaling information consists of an enumeration of segments that correspond to the predetermined subset of transform coefficients. Consequently, the predetermined subset of transform coefficients can be efficiently signaled to the decoder.

Preferably, the signaling information consists of a reference to one of a plurality of predefined subsets of transform coefficients. In this manner, the signaling information may consist of a single number.

Preferably, the signaling information consists of a matrix of flag values, each flag value corresponding to one of the transform coefficients, said flag value equals a predetermined value if the corresponding transform coefficient is part of the predetermined subset of transform coefficients. In this manner, any segmentation of the transform coefficients can be employed.

Preferably, each of the flag values consists of one bit of information. In this manner, signaling information can be transmitted most efficiently to the decoder.

Preferably, the step of signaling is performed whenever the predetermined subset of transform coefficients has been altered. This allows the decoder to keep track of the transform coefficients that are employed by the encoder.

Preferably, the step of signaling is performed once for at least two image areas, or once for a predetermined number of pictures, frames, fields, slices, macro blocks or blocks. Consequently, the gain in coding efficiency can be maximized by applying the same predetermined subset of transform coefficients repeatedly.

Preferably, the signaling information is encoded in the video data. In this manner, the signaling information can be transmitted most easily to the decoder.

Preferably, the quantization matrix that is used for quantizing and dequantizing the transform coefficients comprises the signaling information. In this manner, no additional mechanism for transmitting the signaling information is needed.

Preferably, elements of the quantization matrix, that correspond to transform coefficients that are not part of the predetermined subset of transform coefficients, equal a predetermined quantization value. Consequently, the set of regular-zero coefficients can be clearly identified by the decoder.

Preferably, the predetermined subset of transform coefficients is set adaptively to the image content of the image area, to the image content of adjacent image areas, or to the image content of the image area in preceding frames. In this manner, the decoder can optimize the set of frequencies employed for coding the video data.

Preferably, the predetermined subset of transform coefficients is set according to prior knowledge of the result of the step of transforming or quantizing. Preferably, the chosen predetermined subset of transform coefficients comprises only coefficients that are not known to be zero by virtue of the prior knowledge. Consequently, redundancies in the encoded video data can be removed and coding efficiency can be improved.

Preferably, the predetermined subset of transform coefficients is applied to at least two image areas or to a predetermined number of pictures, frames, fields, slices, macro blocks or blocks. In this manner, the gain in coding efficiency can be further increased.

Preferably, the predetermined subset of transform coefficients is chosen according to the predetermined quantization matrix. Preferably, the predetermined subset of transform coefficients contains only those transform coefficients that are quantized at least with a predetermined minimum precision or for which the corresponding element of the quantization matrix differs from a predetermined quantization value. In this manner, the frequencies used for coding the image can be controlled by the quantization matrix.

Preferably, the predetermined subset of transform coefficients is identified by signaling information. In this manner, the decoder can reconstruct the effective scan employed by the encoder.

Preferably, complementing the two-dimensional array of transform coefficients comprises filling the two-dimensional array with the predetermined transform value and overwriting the predetermined transform value in the two-dimensional array with the values of the inverse scanned transform coefficients upon inverse scanning the decoded transform coefficients. Complementing the two-dimensional array of transform coefficients is thus simplified since there is no need to track the transform coefficients that have been decoded and those that have to be set to the predetermined transform value.

Alternatively, complementing the two-dimensional array of transform coefficients may comprise complementing the decoded transform coefficients with the predetermined transform value to form a complemented set of transform coefficients. The complemented set of transform coefficients can thus be inverse scanned into the two-dimensional array without keeping track of transform coefficients that have been decoded and those that have to be set to the predetermined transform value.

Preferably, the predetermined transform value is zero. This is the most natural choice for transform coefficients that have not been encoded. This choice simplifies the whole decoding process.

Preferably, the image area is a block of pixels, and wherein an image is divided into a plurality of blocks of a uniform size. Splitting the image into image areas upon encoding and assembling the image from decoded image areas is thus simplified.

The above and other objects and features of the present invention will become more apparent from the following description and preferred embodiments given in conjunction with the accompanying drawings, in which:
- Fig.1: schematically illustrates in block diagram form a configuration of a conventional hybrid video encoder,
- Fig. 2: shows an example for a zigzag scan of a block of quantized transform coefficients,
- Fig. 3: schematically illustrates in block diagram form the configuration of a conventional hybrid video decoder,
- Fig. 4a: shows an example for a zigzag scan with non-zero coefficients distributed over the block,
- Fig. 4b: shows an example for a zigzag scan with all non-zero coefficients concentrated in the upper left corner of the block,

- Fig. 5: illustrates the effective scan according to an embodiment of the present invention,
- Fig. 6: is a flow chart illustrating the process of compressing video data in accordance with the present invention,
- Fig. 7: is a block diagram illustrating the signaling of regular-zero coefficients according to a preferred embodiment of the present invention,
- Fig. 8: illustrates the segmentation of the matrix of transform coefficients according to an embodiment of the present invention,
- Fig. 9a: illustrates the segmentation of the matrix of transform coefficients according to another embodiment of the present invention,
- Fig. 9b: illustrates the corresponding segmentation map, and
- Fig. 10: is a flow chart illustrating the process of decoding video data in accordance with the present invention.

### DETAILED DESCRIPTION

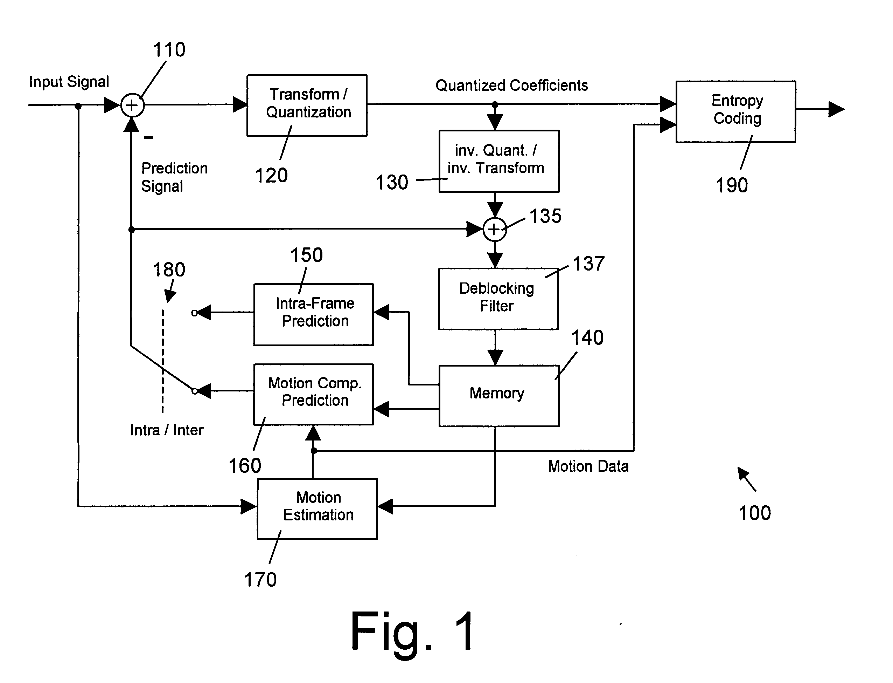

Referring to Fig. 1, an example of a hybrid video encoder is illustrated. The video encoder, generally denoted by reference numeral 100, comprises a subtractor 110 for determining differences between a current block of a video image (input signal) and a prediction signal of the current block which is based on previously encoded blocks stored in memory 140. A transform and quantization unit 120 transforms the resulting prediction error from the spatial domain to the frequency domain and quantizes the obtained transform coefficients. An entropy coding unit 190 entropy encodes the quantized transform coefficients.

In accordance with the H.264 / AVC standard, the input image is divided into macro blocks. The encoder 100 employs a Differential Pulse Code Modulation (DPCM) approach which only transmits differences between blocks of an input video sequence and their predictions based on previously encoded blocks ("the locally decoded image"). These differences are determined in subtractor 110, which receives the blocks to be encoded in order to subtract the prediction signal therefrom.

The locally decoded image is provided by a decoding unit incorporated into video encoder 100. The decoding unit performs the encoding steps in reverse manner. An inverse quantization and inverse transform unit 130 dequantizes the quantized coefficients and applies an inverse transform to the dequantized coefficients. In adder 135, the decoded differences are added to the prediction signal to form the locally decoded image. Further, a deblocking filter 137 reduces blocking artifacts in the decoded image.

The type of prediction that is employed by video encoder 100 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensation/prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensation prediction unit 160, is controlled by Intra/Inter switch 180.

In "inter" mode, a macro block is predicted from corresponding blocks of previous frames by employing motion compensation. The estimation is accomplished by a motion estimator unit 170, receiving the current input signal and the locally decoded image. Motion estimation yields two-dimensional motion vectors, representing a pixel displacement between the current block and the corresponding block in previous frames. Based on the estimated motion, a motion compensation prediction unit 160 provides a prediction signal.

For both the "Intra" and the "Inter" encoding mode, the differences between the current and the predicted signal are transformed into transform coefficients by transform / quantization unit 120. Generally, an orthogonal transform such as a two-dimensional Discrete Cosine Transform (DCT) or an integer version thereof is employed.

The transform coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spend for coding the low frequency components than for the higher ones.

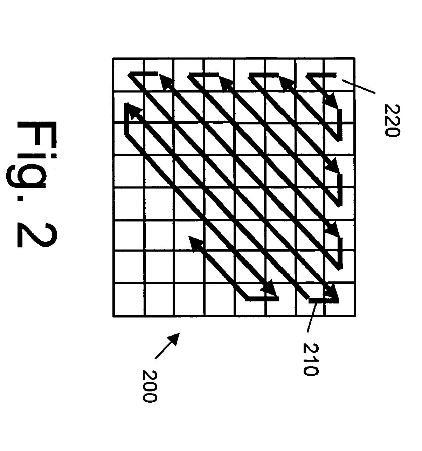

After quantization, the two-dimensional array of transform coefficients has to be converted into a one dimensional string to pass it to the entropy encoder. This conversion is done by scanning the array in a predetermined sequence. An example is the zigzag scan 210 shown in Fig. 2. This scan starts at the lowest frequency coefficient 220, i.e. the DC-component, and is aborted as soon as all non-zero coefficients of the array 200 are scanned.

The thus obtained one dimensional sequence of quantized transform coefficients is compressed to a series of number pairs called run levels. The first number ("run length of zeros") within each run level represents the number of zero coefficients between the last two non-zero coefficients in the sequence. The second number within each run level is the value of the next non-zero coefficient. For example, the sequence of quantized transform coefficients 2 1 0 0 0 4 0 0 6 3 0 0 5 0 0 ... 0 results in the run-level sequence (0, 2) (0, 1) (3, 4) (2, 6) (0, 3) (2, 5) (EOB). The end-of-block (EOB) symbol indicates that all of the remaining coefficients are zero.

Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the decoder side.

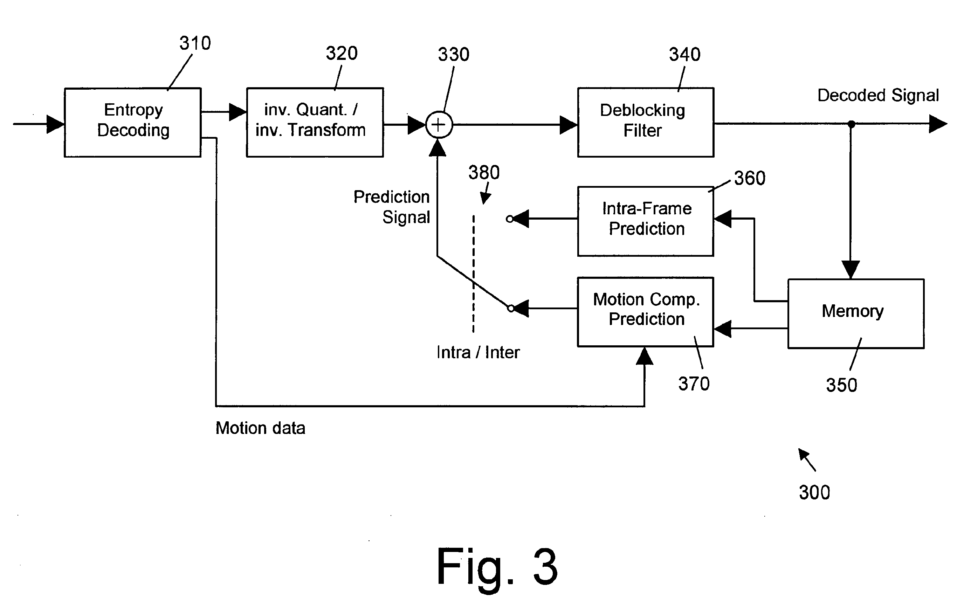

For reconstructing the encoded images at the decoder side, the encoding process is applied in reverse manner. A schematic block diagram, illustrating the configuration of the corresponding decoder, is shown in Fig. 3.

In decoder 300 of Fig. 3, first the entropy encoding of transform coefficients and motion data is reversed in an entropy decoding unit 310. This step also involves an inverse scanning in order to convert the sequence of decoded transform coefficients into a two-dimensional block of data as it is required for the inverse transformation. The decoded block of transform coefficients is then submitted to an inverse quantizer and inverse transformer 320 and the decoded motion data is sent to a motion compensation prediction unit 370. The result of the inverse transform contains prediction differences and is added by adder 330 to the prediction signal stemming from the motion compensation prediction unit 370 in Inter-mode or stemming from an Intra-frame prediction unit 360 in Intra-mode. The reconstructed image may be passed through a deblocking filter 340 and the decoded signal is stored in memory 350 to be applied to prediction units 360, 370.

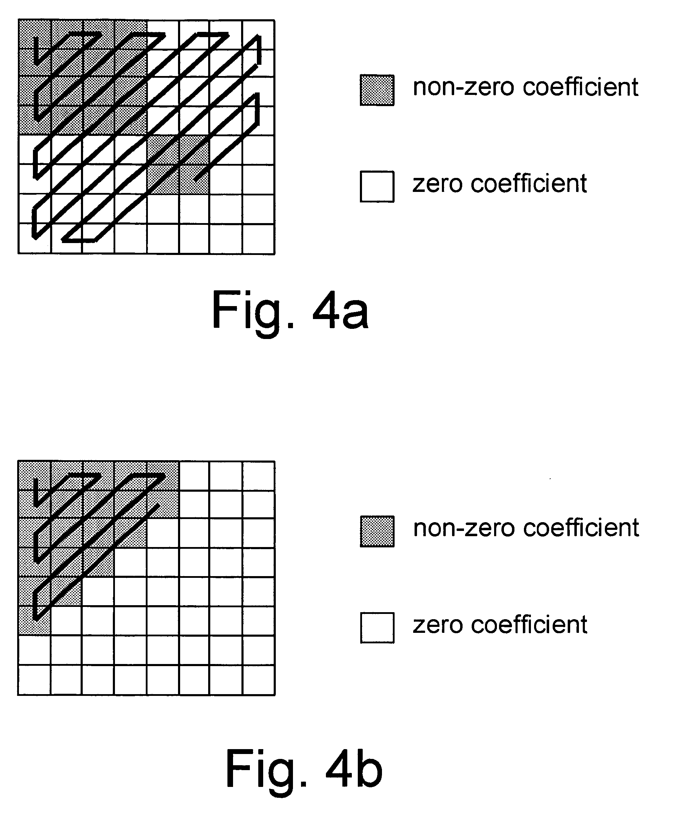

The coding efficiency of the above coding approach used in current video coding standard like MPEG-1, MPEG-2, MPEG-4, H.263, H.264/AVC highly depends on the amount of non-zero transform coefficients to be encoded. The number of non-zero coefficients depends on the picture content of the respective macro block of the residual frame and on the applied quantization. However, coding efficiency also depends on the distribution of the non-zero transform coefficients within the block. If the non-zero coefficients are distributed as shown in Fig 4a, then a lot of zero coefficients have to be scanned before the last non-zero coefficient is reached. On the other hand, if all non-zero coefficients were concentrated in the upper left triangle of the block, no zero coefficients have to be scanned and the scan can be aborted well before the whole block is scanned (cf. Fig 4b).

Small image content changes between subsequent images are often reflected by a large number of quantized high frequency transform coefficients, but only result in hardly perceivable image quality improvements in the reconstructed image. Such minor changes are almost not noticeable for the human eye and the compression of the video data can be increased by suppressing a certain subset of transform coefficients, i.e. by setting these coefficients to zero, without adversely affecting the resulting image quality.

Maintaining only individual frequency components from the frequency domain while suppressing the remaining frequency components of the transformed image area may lead to zero coefficients that have the same location within several blocks. These regular-zero coefficients may occur within different blocks of the same frame or within the same block of consecutive frames.

Regular-zero coefficients may also arise from effects other than said suppression of frequency components. For example, several blocks adjacent in space or time may have a similar frequency characteristics leading to zero coefficients at the same location within each block. Further, several blocks may have similar motion characteristics and thus similar prediction errors so that zeros of the corresponding transform coefficients show up at the same location within each block.

It is the particular approach of the present invention to exploit any form of prior knowledge on the transform coefficients by excluding the regular-zero coefficients from the scan so as to improve coding efficiency. Non-regular coefficients, i.e. non-zero coefficients and zero coefficients that are not regularly zero, are scanned in a predetermined sequence, resulting in a shorter scan and improved coding efficiency. The decoder is aware of the regular-zero coefficients and substitutes the non-encoded transform coefficients by a predetermined transform value upon performing the inverse transformation.

The underlying principle of scanning a subset of transform coefficients of the present invention is not limited to the described hybrid encoding systems. The present invention can be applied to all kinds of encoders employing transform coefficients.

Transform coefficients are divided into two categories, namely into regular-zero coefficients and non-regular coefficients. Regular-zero coefficients are coefficients that are known to be zero anyway by virtue of prior knowledge. Non-regular coefficients are those for which no prior knowledge is available. Non-regular coefficients thus consist of non-zero coefficients and coefficients that happen to be zero, i.e., non-regular zero coefficients.

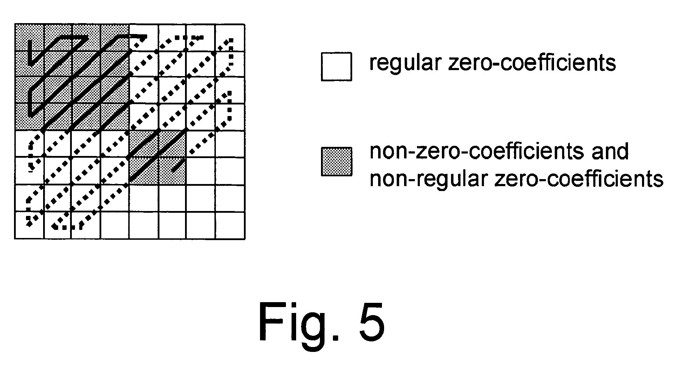

An exemplary implementation of the present invention is illustrated in Fig. 5. The dashed line indicates that the coefficients, which are identified as regular-zero coefficients are discarded, i.e. not scanned and not coded. Thus, the effective scan (solid line in Fig. 5) is shorter, the number of coefficients that have to be coded is reduced, and the coding efficiency is improved.

Although the general approach is illustrated here exemplarily by the zigzag scan, the present invention is not limited to a specific scan. The present invention can be applied to encoders using any scanning scheme.

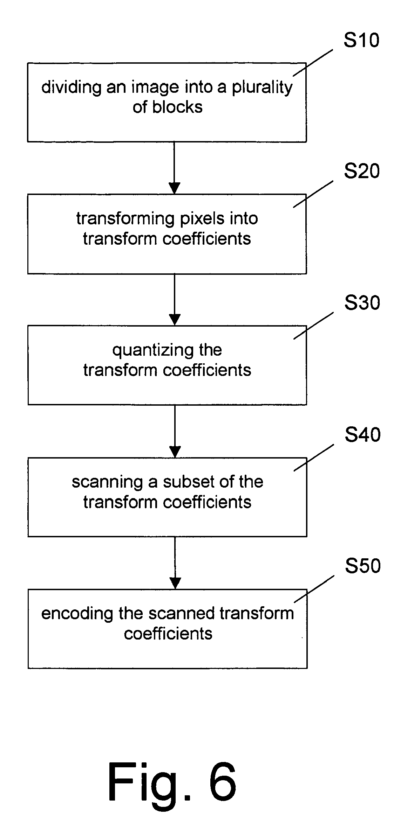

The operation of the encoder in accordance with the present invention is described next in connection with the example in Fig. 6.

Figure 6 is a flowchart illustrating the operation of an encoder in accordance with the present invention. After dividing a video image to be encoded into a plurality of blocks (step S10), the pixels of a block are transformed into a block of transform coefficients (step S20). Alternatively, image areas of a different size or the undivided image is supplied to the transformation stage. Preferably, an orthogonal transform like a DCT or an integer version thereof is applied. The present invention, however, is not restricted to any specific choice of the transform and may be applied to encoders using any transform.

The transform coefficients may be quantized as indicated by step S30. It is to be noted, however, that the quantizing step is optional and that the present invention can also be applied to video compression without quantization of the transform coefficients.

From the transform coefficients, a subset of the transform coefficients is scanned (step S40). As described in connection with Fig. 5 the scanning process may be performed in accordance with different embodiments. In particular, the scanning process can account for the existence of regular-zero coefficients in order to obtain shorter scans and an improved coding efficiency.

Only the scanned transform coefficients are encoded in step S50. The encoding result is transmitted to a decoder or is stored on a storage medium.

In order to enable the decoder to perform the inverse scanning upon decoding the signal, information on the applied scan has to be transmitted by the encoder to the decoder. In particular, the decoder has to be informed on the subset of transform coefficients that have been encoded and on the spatial frequency to which each of them corresponds. This information can be deduced by the decoder from its knowledge about regular-zero coefficients.

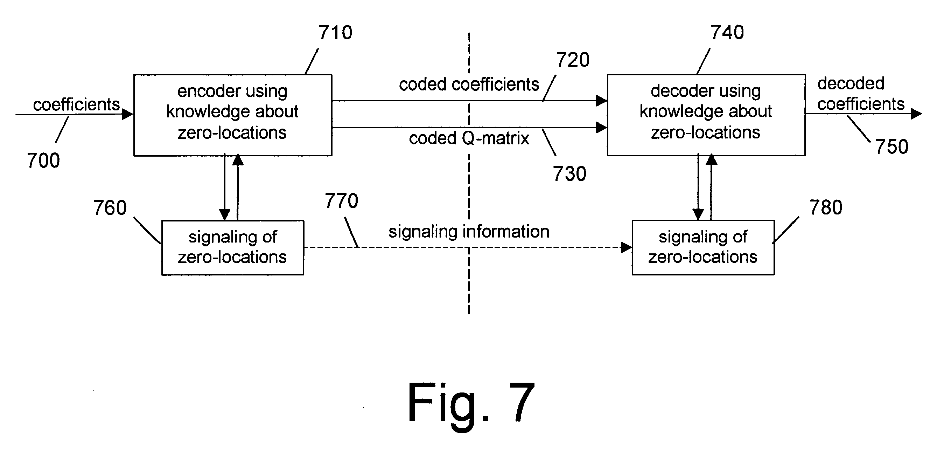

Figure 7 illustrates a preferred embodiment of the present invention, where information on the regular-zero locations is signaled to the decoder by means of a dedicated mechanism. By virtue of the signaled information, the decoder is able to reconstruct the effective scan that has been applied by the encoder, invert the scan, and decode the transform coefficients.

Signaling can occur either explicitly or implicitly. Explicit signaling involves transmission of signaling information 770 from the encoder to the decoder side, for example by coding the signaling information into the data stream that represents the encoded video data. Transmission of signaling information, however, is only necessary upon a change in the location of the regular-zero coefficients. Keeping the location of regular-zero coefficients constant for several consecutive blocks is thus a good strategy to optimize required storage capacity or transmission bandwidth. Hence, explicit signaling may occur, for instance, once per sequence, per picture, per frame, per field, per slice, per master block or once per a predetermined number thereof.

Implicit signaling relies on a predefined scheme (760, 780) for segmenting transform coefficients into regular-zero coefficients and non-regular coefficients that is implemented both in the encoder and the decoder. In this case no additional signaling information 770 has to be transmitted at all.

The predefined scheme for segmenting transform coefficients into regular-zero coefficients and non-regular coefficients may consist of a predetermined sequence of segmentation patterns that are employed one by one for encoding the current frame, slice, or block, etc. Each segmentation pattern defines a particular segmentation of the transform coefficients into regular-zero coefficients and non-regular coefficients, i.e., into coefficients that are scanned and encoded, and others that are not. In addition, the start of such a sequence may be defined by the type of the current picture. For example, transmission of an I-frame may automatically restart the sequence. Alternatively, a restart of the sequence may be signaled explicitly by setting a reset flag in the header of the current frame, slice, or block, etc. In this manner, the coding can be adapted to account for scene changes.

Further, in a combination of explicit and implicit signaling, a particular sequence of segmentation patterns that are employed one by one for encoding the current frame, slice, or block, etc., may be transmitted explicitly from the encoder to the decoder, for example, in a sequence parameter header. The segmentation pattern that is employed for encoding the current block is then switched implicitly, e.g., picture by picture. This embodiment is particularly useful for multi-pass coding when scenes are analyzed in a first pass so that segmentation patterns used in the second pass can be adapted specifically to the frequency content of the scene.

The decoder 740 can employ the signaling of zero-locations 780 to deduce which transform coefficients 700 were not scanned and encoded, thus reconstructing the effective scan employed by the encoder 710. Hence, the decoder can invert the effective scan, decode the subset of transform coefficients 720, and substitute the non-decoded transform coefficients yielding a full set of decoded transform coefficients 750.

The implementation of Fig. 7 can also be used to restrict the spatial frequencies that are employed to encode a given image area. This is achieved by marking transform coefficients that are to be suppressed as regular-zero coefficients. These coefficients will not be scanned and encoded at all. In this manner, the amount of data to be encoded can further be reduced and coding efficiency improved.

This method provides control over the subset of transform coefficients that are actually employed to encode the video images. Hence, this subset can also be set adaptively to the image content or according to any prior knowledge of the result of the step of transforming. For example, this subset can also be set according to the result of the transformation of previously encoded image areas either within the same frame or within preceding frames. This subset could also be altered in accordance to a predetermined sequence of subsets of transform coefficients. Altering the subset can occur, for instance, once per sequence, per picture, per slice, or even on macro block level.

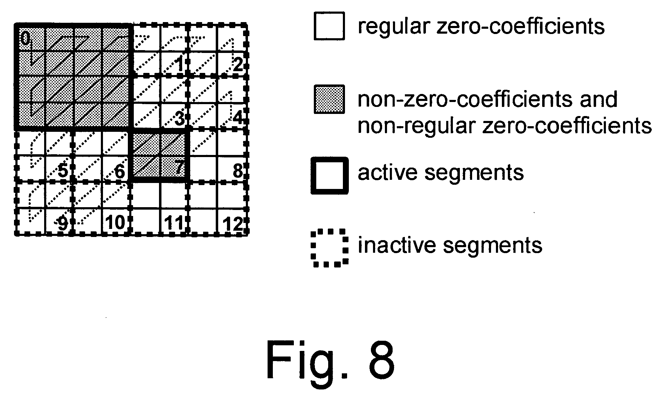

A preferred embodiment is described next in connection with Fig. 8.

Figure 8 shows an example of segmenting the matrix of transform coefficients into a plurality of segments indicated by numerals 0 - 12. Each segment is either active or inactive depending on whether it contains non-regular coefficients or not. Only active segments will be scanned and encoded.

It is to be noted that the present invention is not restricted in any way to the particular segmentation shown in Fig. 8. Many different segmentations are possible and the present invention can be applied to any of them.

Information on the applied scan, i.e., the active segments, can be signaled to the decoder by referring to the set of active segments. In the example of Fig. 8 only segment 0 and segment 7 are active. This information can either be signaled explicitly or implicitly to the decoder. Explicit signaling may involve dedicated code words that enumerate the active or inactive segments. Alternatively, these code words may refer to predefined sets of active segments. For example, the segmentation shown in Fig. 8 may be referred to as segmentation set number 1, another one as segmentation set number 2, etc.

Implicit signaling may be based on a protocol that specifies a particular order of activ segments or conditions under which a particular combination of segments is active. These conditions may depend on the number of the current frame or block, the image content, etc. For example, it may be specified that the segments 0, 1, ... , 12 are applied one by one for consecutive blocks, macro blocks, slices, fields, frames, etc. More generally, it may be specified that a particular combination of active segments should be applied to every n-th frame, whereas a set of n-1 other combinations has to be adopted respectively for the n-1 frames in between. In both cases, no additional information on active or inactive segments has to be transmitted.

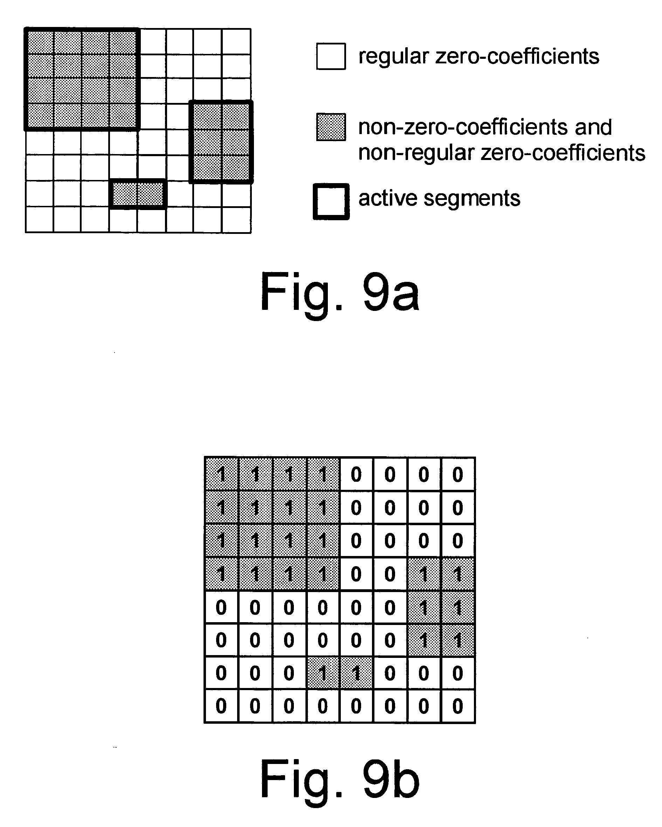

Figure 9 exhibits another embodiment of the present invention for signaling the location of regular-zero coefficients. Based on the segmentation of the matrix of transform coefficients into regular-zero coefficients and non-zero or non-regular zero coefficients, a segmentation map is constructed. The shaded area in Fig. 9a corresponds to active segments of the transform coefficient matrix, i.e., to non-zero or non-regular zero coefficients, that are to be scanned and encoded. The corresponding segmentation map shown in Fig. 9b consists of a matrix of flag values indicating whether the transform coefficient belongs to an active segment or not, i.e., whether the transform coefficient is a regular-zero coefficient or not. In this way, any segmentation of transform coefficients can be faithfully reproduced.

Based on the segmentation map a particular segmentation of transform coefficients can be signaled explicitly to the decoder by converting the segmentation map into an appropriate code word. This conversion may for example comprise transmission of 64 bits for the set of 8-by-8 transform coefficients shown in Fig. 9. Alternatively, specialized code words that refer to particular predefined segmentations can be employed. For example, the segmentation shown in FIG. 9 may be referred to as segmentation map number 1, another one as segmentation map number 2, etc.

The segmentation of transform coefficients may also be signaled implicitly by means of a protocol that specifies a particular order of segmentation maps or conditions under which a particular segmentation map is adopted. These conditions may depend on the number of the current frame or block, the image content, etc. For example, it may be specified that a particular segmentation map applies to every n-th frame, whereas a set of n-1 other segmentation maps has to be adopted respectively for the n-1 frames in between. In this case, no additional information on the segmentation of transform coefficients has to be transmitted.

According to another embodiment, the quantization matrix is used to signal the location of regular-zero coefficients. The quantization matrix consists of quantization values, each of which is used to quantize the corresponding transform coefficient by dividing the transform coefficient by the quantization value and taking the integer part of the result. The location of regular-zero coefficients may be signaled by setting quantization matrix elements, that correspond to regular-zero coefficients, to a predetermined quantization value such as zero. Since the quantization matrix has to be transmitted to the decoder anyway, no additional mechanism for transmitting the signaling information is needed.

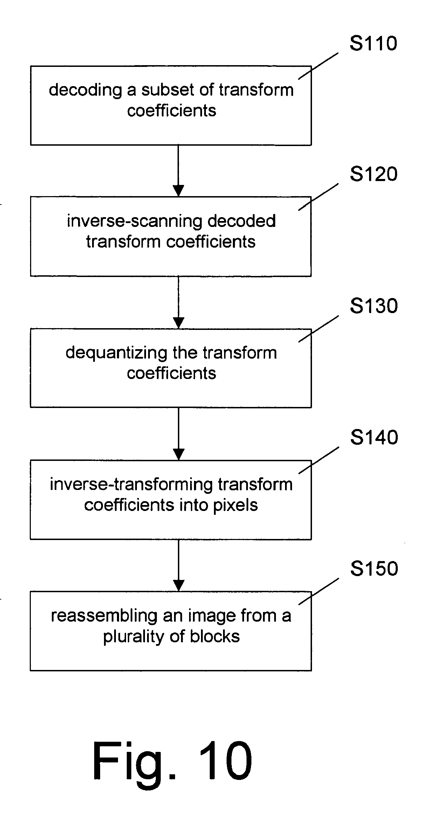

The operation of the decoder in accordance with the present invention is described next in connection with the example in Fig. 10.

Figure 10 is a flowchart illustrating the operation of a decoder in accordance with the present invention. After decoding a subset of transform coefficients in step S110, the decoded transform coefficients are inverse scanned and non-decoded transform coefficients are substituted by predetermined values (step S120). As described above, the information on the scan applied by the encoder is signaled to the decoder either explicitly or implicitly. With that information, the decoder can assign the decoded transform coefficients to the correct frequency component.

The transform coefficients may be dequantized as indicated in step S130. In step S140 an inverse transform is applied in order to transform the block of transform coefficients into a block of pixels. Finally, in step S150 the image is reassembled from the corresponding plurality of blocks. The image data is either displayed or stored on a storage medium.

Summarizing, the present invention relates to encoding and decoding of video data with improved coding efficiency. After transforming pixel data into the frequency domain, only a predetermined subset of transform coefficients is scanned and encoded. In this way, prior knowledge about the location of regular-zero transform coefficients can be exploited so as to reduce redundancies in the coded video data. Information about the location of regular-zero coefficients is signaled either explicitly or implicitly to the decoder. The decoder decodes the subset of transform coefficients, employs the signaled information about the location of regular-zero coefficients to inverse scan the decoded transform coefficients, and inverse transforms the transform coefficients back into a block of pixels.

## Claims

1. A method for encoding video data, including the steps of
transforming (S20) pixels of an image area into transform coefficients in the frequency domain,
scanning (S40) transform coefficients, and
encoding (S50) the scanned transform coefficients
**characterized in that**
only a predetermined subset of transform coefficients is scanned and encoded.

2. A method for encoding video data according to claim 1 wherein the transform coefficients are divided into a predefined plurality of segments and the predetermined subset of transform coefficients is set according to a predetermined subset of the plurality of segments.

3. A method for encoding video data according to claim 1 or 2 wherein the predetermined subset of transform coefficients is altered according to a predefined sequence of subsets of transform coefficients.

4. A method for encoding video data according to claim 1 or 2 wherein the predetermined subset of transform coefficients is altered from frame to frame or from field to field or from image area to image area according to a predefined sequence of subsets of transform coefficients.

5. A method for encoding video data according to claim 3 or 4 wherein the predefined sequence of subsets of transform coefficients is restarted whenever a predetermined type of frame is encoded.

6. A method for encoding video data according to any of claims 3-5 further comprising the step of signaling restarts of the predefined sequence of subsets of transform coefficients to a decoder.

7. A method for encoding video data according to any of claims 3-6 further comprising the step of signaling the predefined sequence of subsets of transform coefficients to a decoder.

8. A method for encoding video data according to claim 1 or 2 further comprising the step of signaling information on the predetermined subset of transform coefficients to a decoder.

9. A method for encoding video data according to claim 8 wherein the signaling information (770) defines the transform coefficients that have been encoded in the video data.

10. A method for encoding video data according to claim 8 or 9 wherein the signaling information (770) defines the order in which the transform coefficients have been encoded in the video data.

11. A method for encoding video data according to any of claims 8-10 wherein the signaling information (770) consists of an enumeration of transform coefficients that are part of the predetermined subset of transform coefficients.

12. A method for encoding video data according to any of claims 8-10 wherein the signaling information (770) consists of an enumeration of transform coefficients that are not part of the predetermined subset of transform coefficients.

13. A method for encoding video data according to any of claims 8-10 wherein the transform coefficients are divided into a predefined plurality of segments; and wherein the signaling information (770) consists of an enumeration of segments that correspond to the predetermined subset of transform coefficients.

14. A method for encoding video data according to any of claims 8-10 wherein the signaling information (770) consists of a reference to one of a plurality of predefined subsets of transform coefficients.

15. A method for encoding video data according to any of claims 8-10 wherein the signaling information (770) consists of a matrix of flag values, each flag value corresponding to one of the transform coefficients, said flag value equals a predetermined value if the corresponding transform coefficient is part of the predetermined subset of transform coefficients.

16. A method for encoding video data according to claim 15 wherein each of the flag values consists of one bit of information.

17. A method for encoding video data according to any of claims 8-16 wherein the step of signaling is performed whenever the predetermined subset of transform coefficients has been altered.

18. A method for encoding video data according to any of claims 8-17 wherein the step of signaling is performed once for at least two image areas.

19. A method for encoding video data according to any of claims 8-17 wherein the step of signaling is performed once for a predetermined number of pictures, frames, fields, slices, macro blocks or blocks.

20. A method for encoding video data according to any of claims 6-19 wherein the signaling information (770) is encoded in the video data.

21. A method for encoding video data according to claim 8 further comprising the step of quantizing (S30) the transform coefficients by a predetermined quantization matrix, and wherein the predetermined quantization matrix comprises the signaling information (770).

22. A method for encoding video data according to claim 21 wherein elements of the quantization matrix, that correspond to transform coefficients that are not part of the predetermined subset of transform coefficients, equal a predetermined quantization value.

23. A method for encoding video data according to claim 1 wherein the predetermined subset of transform coefficients is set adaptively.

24. A method for encoding video data according to claim 1 wherein the predetermined subset of transform coefficients is set adaptively to the image content of the image area.

25. A method for encoding video data according to claim 1 wherein the predetermined subset of transform coefficients is set adaptively to the image content of adjacent image areas.

26. A method for encoding video data according to claim 1 wherein the predetermined subset of transform coefficients is set adaptively to the image content of the image area in preceding frames.

27. A method for encoding video data according to claim 1 wherein the predetermined subset of transform coefficients is set according to prior knowledge of the result of the step of transforming (S20).

28. A method for encoding video data according to any of claims 23-27 wherein the predetermined subset of transform coefficients is applied to at least two image areas.

29. A method for encoding video data according to any of claims 23-27 wherein the predetermined subset of transform coefficients is applied to a predetermined number of pictures, frames, fields, slices, macro blocks or blocks.

30. A method for encoding video data according to claim 1 further comprising the step of quantizing (S30) the transform coefficients by a predetermined quantization matrix, and
wherein the predetermined subset of transform coefficients is chosen according to prior knowledge of the result of the step of quantizing (S30).

31. A method for encoding video data according to claim 30 wherein the predetermined subset of transform coefficients is chosen according to the predetermined quantization matrix.

32. A method for encoding video data according to claim 30 wherein the predetermined subset of transform coefficients contains only those transform coefficients for which the corresponding element of the quantization matrix differs from a predetermined quantization value.

33. A method for encoding video data according to claim 27 or 30 wherein the chosen predetermined subset of transform coefficients comprises only coefficients that are not known to be zero by virtue of the prior knowledge.

34. A method for decoding video data, including the steps of
decoding (S110) encoded transform coefficients,
inverse scanning (S120) the decoded transform coefficients into a two-dimensional array of transform coefficients, and
inverse transforming (S140) the two-dimensional array of transform coefficients from the frequency domain into pixels of an image area,
**characterized in that**
the decoded transform coefficients form a predetermined subset of the two-dimensional array of transform coefficients, and
by the step of complementing the two-dimensional array of transform coefficients with a predetermined transform value.

35. A method for decoding video data according to claim 34 wherein the two-dimensional array of transform coefficients is divided into a predefined plurality of segments and the predetermined subset of the two-dimensional array of transform coefficients is set according to a predetermined subset of the plurality of segments.

36. A method for decoding video data according to claim 34 or 35 wherein the predetermined subset of the two-dimensional array of transform coefficients is altered according to a predefined sequence of subsets of the two-dimensional array of transform coefficients.

37. A method for decoding video data according to claim 34 or 35 wherein the predetermined subset of the two-dimensional array of transform coefficients is altered from frame to frame or from field to field or from image area to image according to a predefined sequence of subsets of the two-dimensional array of transform coefficients.

38. A method for decoding video data according to claim 36 or 37 wherein the predefined sequence of subsets of the two-dimensional array of transform coefficients is restarted whenever a predetermined type of frame is decoded.

39. A method for decoding video data according to any of claims 36-38 further comprising the step of obtaining signaling information (770) of an encoder, and wherein restarts of the predefined sequence of subsets of the two-dimensional array of transform coefficients are identified by the signaling information (770).

40. A method for decoding video data according to any of claims 36-39 further comprising the step of obtaining signaling information (770) of an encoder, and wherein the predefined sequence of subsets of the two-dimensional array of transform coefficients is identified by the signaling information (770).

41. A method for decoding video data according to claim 34 or 35 further comprising the step of obtaining signaling information (770) of an encoder, and wherein the predetermined subset of transform coefficients is identified by the signaling information (770).

42. A method for decoding video data according to claim 41 wherein the signaling information (770) defines the transform coefficients that have been encoded in the video data.

43. A method for decoding video data according to claim 41 or 42 wherein the signaling information (770) defines the order in which the transform coefficients have been encoded in the video data.

44. A method for decoding video data according to any of claims 41-43 wherein the signaling information (770) consists of an enumeration of transform coefficients that are part of the predetermined subset of transform coefficients.

45. A method for decoding video data according to any of claims 41-43 wherein the signaling information (770) consists of an enumeration of transform coefficients that are not part of the predetermined subset of transform coefficients.

46. A method for decoding video data according to any of claims 41-43 wherein the transform coefficients are divided into a predefined plurality of segments; and wherein the signaling information (770) consists of an enumeration of segments that correspond to the predetermined subset of transform coefficients.

47. A method for decoding video data according to any of claims 41-43 wherein the signaling information (770) consists of a reference to one of a plurality of predefined subsets of transform coefficients.

48. A method for decoding video data according to any of claims 41-43 wherein the signaling information (770) consists of a matrix of flag values, each flag value corresponding to one of the transform coefficients, said flag value equals a predetermined value if the corresponding transform coefficient is part of the predetermined subset of transform coefficients.

49. A method for decoding video data according to claim 48 wherein each of the flag values consists of one bit of information.

50. A method for decoding video data according to any of claims 39-49 wherein the signaling information (770) is obtained from the video data.

51. A method for decoding video data according to claim 41-49 wherein the signaling information (770) is obtained from the video data once for at least two image areas.

52. A method for decoding video data according to claim 41-49 wherein the signaling information (770) is obtained from the video data once for a predetermined number of pictures, frames, fields, slices, macro blocks or blocks.

53. A method for decoding video data according to any of claims 41-43 further comprising the step of inverse quantizing the transform coefficients by a predetermined quantization matrix, and wherein the signaling information (770) is derived from the predetermined quantization matrix.

54. A method for decoding video data according to claim 53 wherein transform coefficients that are not part of the predetermined subset of transform coefficients, are identified by the corresponding element of the quantization matrix being equal to a predetermined quantization value.

55. A method for decoding video data for decoding video data according to any of claims 34-54 wherein the step of complementing the two-dimensional array of transform coefficients comprises the substep of filling the two-dimensional array with the predetermined transform value, and
wherein inverse scanning the decoded transform coefficients comprises overwriting predetermined transform values in the two-dimensional array with the values of the inverse scanned transform coefficients.

56. A method for decoding video data for decoding video data according to any of claims 34-54 wherein the step of complementing the two-dimensional array of transform coefficients comprises the substep of complementing the decoded transform coefficients to form a complemented set of transform coefficients and
wherein the complemented set of transform coefficients is inverse scanned into a two-dimensional array.

57. A method for decoding video data according to any of claims 34-56 wherein the predetermined transform value is zero.

58. A method according to any of claims 1 - 57, wherein said image area is a block of pixels, and wherein an input image is divided into a plurality of blocks of a uniform size.

59. An encoding apparatus for encoding video data, comprising:
a transformer (120) for transforming pixels of an image area into transform coefficients in the frequency domain,
a scanner for scanning transform coefficients, and
an encoder (190) for encoding the scanned transform coefficients
**characterized in that**
only a predetermined subset of transform coefficients is scanned and encoded.

60. An encoding apparatus according to claim 59 wherein the transform coefficients are divided into a predefined plurality of segments and the predetermined subset of transform coefficients is set according to a predetermined subset of the plurality of segments.

61. An encoding apparatus according to claim 59 or 60 wherein the predetermined subset of transform coefficients is altered according to a predefined sequence of subsets of transform coefficients.

62. An encoding apparatus according to claim 59 or 60 wherein the predetermined subset of transform coefficients is altered from frame to frame or from field to field or from image area to image area according to a predefined sequence of subsets of transform coefficients.

63. An encoding apparatus according to claim 61 or 62 wherein the predefined sequence of subsets of transform coefficients is restarted whenever a predetermined type of frame is encoded.

64. An encoding apparatus according to any of claims 61-63 further comprising signaling means (760) for signaling restarts of the predefined sequence of subsets of transform coefficients to a decoder.

65. An encoding apparatus according to any of claims 61-64 further comprising signaling means (760) for signaling the predefined sequence of subsets of transform coefficients to a decoder.

66. An encoding apparatus according to claim 59 or 60 further comprising signaling means (760) for signaling information (770) on the predetermined subset of transform coefficients to a decoder (740).

67. An encoding apparatus according to claim 66 wherein the signaling information (770) defines the transform coefficients that have been encoded in the video data.

68. An encoding apparatus according to claim 66 or 67 wherein the signaling information (770) defines the order in which the transform coefficients have been encoded in the video data.

69. An encoding apparatus according to any of claims 66-68 wherein the signaling information (770) consists of an enumeration of transform coefficients that are part of the predetermined subset of transform coefficients.

70. An encoding apparatus according to any of claims 66-68 wherein the signaling information (770) consists of an enumeration of transform coefficients that are not part of the predetermined subset of transform coefficients.

71. An encoding apparatus according to any of claims 66-68 wherein the transform coefficients are divided into a predefined plurality of segments; and wherein the signaling information (770) consists of an enumeration of segments that correspond to the predetermined subset of transform coefficients.

72. An encoding apparatus according to any of claims 66-68 wherein the signaling information (770) consists of a reference to one of a plurality of predefined subsets of transform coefficients.

73. An encoding apparatus according to any of claims 66-68 wherein the signaling information (770) consists of a matrix of flag values, each flag value corresponding to one of the transform coefficients, said flag value equals a predetermined value if the corresponding transform coefficient is part of the predetermined subset of transform coefficients.

74. An encoding apparatus according to claim 73 wherein each of the flag values consists of one bit of information.

75. An encoding apparatus according to any of claims 66-74 wherein the signaling means (760) is signaling the signaling information (770) whenever the predetermined subset of transform coefficients has been altered.

76. An encoding apparatus according to any of claims 66-75 wherein the signaling means (760) is signaling the signaling information (770) once for at least two image areas.

77. An encoding apparatus according to any of claims 66-75 wherein the signaling means (760) is signaling the signaling information (770) once for a predetermined number of pictures, frames, fields, slices, macro blocks or blocks.

78. An encoding apparatus according to any of claims 64-77 wherein the signaling information (770) is encoded in the video data.

79. An encoding apparatus according to claim 66 further comprising a quantizer for quantizing the transform coefficients by a predetermined quantization matrix, and wherein the predetermined quantization matrix comprises the signaling information (770).

80. An encoding apparatus according to claim 79 wherein elements of the quantization matrix, that correspond to transform coefficients that are not part of the predetermined subset of transform coefficients, equal a predetermined quantization value.

81. An encoding apparatus according to claim 59 wherein the predetermined subset of transform coefficients is set adaptively.

82. An encoding apparatus according to claim 59 wherein the predetermined subset of transform coefficients is set adaptively to the image content of the image area.

83. An encoding apparatus according to claim 59 wherein the predetermined subset of transform coefficients is set adaptively to the image content of adjacent image areas.

84. An encoding apparatus according to claim 59 wherein the predetermined subset of transform coefficients is set adaptively to the image content of the image area in preceding frames.

85. An encoding apparatus according to claim 59 wherein the predetermined subset of transform coefficients is set according to prior knowledge of the output of the transformer.

86. An encoding apparatus according to any of claims 81-85 wherein the predetermined subset of transform coefficients is applied to at least two image areas.

87. An encoding apparatus according to any of claims 81-85 wherein the predetermined subset of transform coefficients is applied to a predetermined number of pictures, frames, fields, slices, macro blocks or blocks.

88. An encoding apparatus according to claim 59 further comprising a quantizer for quantizing the transform coefficients by a predetermined quantization matrix, and
wherein the predetermined subset of transform coefficients is chosen according to prior knowledge of the output of the quantizer.

89. An encoding apparatus according to claim 88 wherein the predetermined subset of transform coefficients is chosen according to the predetermined quantization matrix.

90. An encoding apparatus according to claim 88 wherein the predetermined subset of transform coefficients contains only those transform coefficients for which the corresponding element of the quantization matrix differs from a predetermined quantization value.

91. An encoding apparatus according to claim 85 or 88 wherein the chosen predetermined subset of transform coefficients comprises only coefficients that are not known to be zero by virtue of the prior knowledge.

92. A decoding apparatus for decoding video data, comprising:
a decoder (310) for decoding encoded transform coefficients,
an inverse scanner for inverse scanning the decoded transform coefficients into a two-dimensional array of transform coefficients, and
an inverse transformer (320) for inverse transforming the two-dimensional array of transform coefficients from the frequency domain into pixels of an image area,
**characterized in that**
the decoded transform coefficients form a predetermined subset of the two-dimensional array of transform coefficients, and
a complementing means for complementing the two-dimensional array of transform coefficients with a predetermined transform value.

93. A decoding apparatus according to claim 92 wherein the two-dimensional array of transform coefficients is divided into a predefined plurality of segments and the predetermined subset of the two-dimensional array of transform coefficients is set according to a predetermined subset of the plurality of segments.

94. A decoding apparatus according to claim 92 or 93 wherein the predetermined subset of the two-dimensional array of transform coefficients is altered according to a predefined sequence of subsets of the two-dimensional array of transform coefficients.

95. A decoding apparatus according to claim 92 or 93 wherein the predetermined subset of the two-dimensional array of transform coefficients is altered from frame to frame or from field to field or from image area to image according to a predefined sequence of subsets of the two-dimensional array of transform coefficients.

96. A decoding apparatus according to claim 94 or 95 wherein the predefined sequence of subsets of the two-dimensional array of transform coefficients is restarted whenever a predetermined type of frame is decoded.

97. A decoding apparatus according to any of claims 94-96 further comprising a signaling means (780), and wherein restarts of the predefined sequence of subsets of the two-dimensional array of transform coefficients are identified by signaling information (770) obtained by the signaling means (780).

98. A decoding apparatus according to any of claims 94-97 further comprising a signaling means (780), and wherein the predefined sequence of subsets of the two-dimensional array of transform coefficients is identified by signaling information (770) obtained by the signaling means (780).

99. A decoding apparatus according to claim 92 or 93 further comprising a signaling means (780), and wherein the predetermined subset of transform coefficients is identified by signaling information (770) obtained by the signaling means (780).

100. A decoding apparatus according to claim 99 wherein the signaling information (770) defines the transform coefficients that have been encoded in the video data.

101. A decoding apparatus according to claim 99 or 100 wherein the signaling information (770) defines the order in which the transform coefficients have been encoded in the video data.

102. A decoding apparatus according to any of claims 99-101 wherein the signaling information (770) consists of an enumeration of transform coefficients that are part of the predetermined subset of transform coefficients.

103. A decoding apparatus according to any of claims 99-101 wherein the signaling information (770) consists of an enumeration of transform coefficients that are not part of the predetermined subset of transform coefficients.

104. A decoding apparatus according to any of claims 99-101 wherein the transform coefficients are divided into a predefined plurality of segments; and wherein the signaling information (770) consists of an enumeration of segments that correspond to the predetermined subset of transform coefficients.

105. A decoding apparatus according to any of claims 99-101 wherein the signaling information (770) consists of a reference to one of a plurality of predefined subsets of transform coefficients.

106. A decoding apparatus according to any of claims 99-101 wherein the signaling information (770) consists of a matrix of flag values, each flag value corresponding to one of the transform coefficients, said flag value equals a predetermined value if the corresponding transform coefficient is part of the predetermined subset of transform coefficients.

107. A decoding apparatus according to claim 106 wherein each of the flag values consists of one bit of information.

108. A decoding apparatus according to any of claims 97-107 wherein the signaling means (780) obtains the signaling information (770) from the video data.

109. A decoding apparatus according to claim 99-107 wherein the signaling means (780) obtains the signaling information (770) from the video data once for at least two image areas.

110. A decoding apparatus according to claim 99-107 wherein the signaling means (780) obtains the signaling information (770) from the video data once for a predetermined number of pictures, frames, fields, slices, macro blocks or blocks.

111. A decoding apparatus according to any of claims 99-101 further comprising an inverse quantizer for inverse quantizing the transform coefficients by a predetermined quantization matrix, and wherein the signaling information (770) is derived from the predetermined quantization matrix.

112. A decoding apparatus according to claim 111 wherein transform coefficients that are not part of the predetermined subset of transform coefficients, are identified by the corresponding element of the quantization matrix being equal to a predetermined quantization value.

113. A decoding apparatus for decoding video data according to any of claims 92-112 wherein the complementing means fills the two-dimensional array with the predetermined transform value, and
wherein the inverse scanner is overwriting the predetermined transform value in the two-dimensional array with the values of the inverse scanned transform coefficients.

114. A decoding apparatus for decoding video data according to any of claims 92-112 wherein the complementing means complements the decoded transform coefficients with the predetermined transform value to form a complemented set of transform coefficients, and
wherein the inverse scanner is inverse scanning the complemented set of transform coefficients into the two-dimensional array.

115. A decoding apparatus according to any of claims 92-114 wherein the predetermined transform value is zero.

116. An apparatus according to any of claims 59-116, wherein said image area is a block of pixels, and wherein an input image is divided into a plurality of blocks of a uniform size.

## Amended claims

### Amended claims in accordance with Rule 86(2) EPC.

**1.** A method for encoding video data, including the steps of
transforming (S20) pixels of an image area into transform coefficients in the frequency domain,
scanning (S40) transform coefficients, and
encoding (S50) the scanned transform coefficients
**characterized in that**
only a predetermined proper subset of transform coefficients is scanned and encoded.

**2.** A method for encoding video data according to claim 1 wherein the transform coefficients are divided into a predefined plurality of segments and the predetermined proper subset of transform coefficients is set according to a predetermined subset of the plurality of segments.

**3.** A method for encoding video data according to claim 1 or 2 wherein the predetermined proper subset of transform coefficients is altered according to a predefined sequence of proper subsets of transform coefficients.

**4.** A method for encoding video data according to claim 1 or 2 wherein the predetermined proper subset of transform coefficients is altered from frame to frame or from field to field or from image area to image area according to a predefined sequence of proper subsets of transform coefficients.

**5.** A method for encoding video data according to claim 3 or 4 wherein the predefined sequence of proper subsets of transform coefficients is restarted whenever a predetermined type of frame is encoded.

**6.** A method for encoding video data according to any of claims 3-5 further comprising the step of signaling restarts of the predefined sequence of proper subsets of transform coefficients to a decoder.

**7.** A method for encoding video data according to any of claims 3-6 further comprising the step of signaling the predefined sequence of proper subsets of transform coefficients to a decoder.

**8.** A method for encoding video data according to claim 1 or 2 further comprising the step of signaling information on the predetermined proper subset of transform coefficients to a decoder.

**9.** A method for encoding video data according to claim 8 wherein the signaling information (770) defines the transform coefficients that have been encoded in the video data.

**10.** A method for encoding video data according to claim 8 or 9 wherein the signaling information (770) defines the order in which the transform coefficients have been encoded in the video data.

**11.** A method for encoding video data according to any of claims 8-10 wherein the signaling information (770) consists of an enumeration of transform coefficients that are part of the predetermined proper subset of transform coefficients.

**12.** A method for encoding video data according to any of claims 8-10 wherein the signaling information (770) consists of an enumeration of transform coefficients that are not part of the predetermined proper subset of transform coefficients.

**13.** A method for encoding video data according to any of claims 8-10 wherein the transform coefficients are divided into a predefined plurality of segments; and wherein the signaling information (770) consists of an enumeration of segments that correspond to the predetermined proper subset of transform coefficients.

**14.** A method for encoding video data according to any of claims 8-10 wherein the signaling information (770) consists of a reference to one of a plurality of predefined proper subsets of transform coefficients.

**15.** A method for encoding video data according to any of claims 8-10 wherein the signaling information (770) consists of a matrix of flag values, each flag value corresponding to one of the transform coefficients, said flag value equals a predetermined value if the corresponding transform coefficient is part of the predetermined proper subset of transform coefficients.

**16.** A method for encoding video data according to claim 15 wherein each of the flag values consists of one bit of information.

**17.** A method for encoding video data according to any of claims 8-16 wherein the step of signaling is performed whenever the predetermined proper subset of transform coefficients has been altered.

**18.** A method for encoding video data according to any of claims 8-17 wherein the step of signaling is performed once for at least two image areas.

**19.** A method for encoding video data according to any of claims 8-17 wherein the step of signaling is performed once for a predetermined number of pictures, frames, fields, slices, macro blocks or blocks.

**20.** A method for encoding video data according to any of claims 6-19 wherein the signaling information (770) is encoded in the video data.

**21.** A method for encoding video data according to claim 8 further comprising the step of quantizing (S30) the transform coefficients by a predetermined quantization matrix, and wherein the predetermined quantization matrix comprises the signaling information (770).

**22.** A method for encoding video data according to claim 21 wherein elements of the quantization matrix, that correspond to transform coefficients that are not part of the predetermined proper subset of transform coefficients, equal a predetermined quantization value.

**23.** A method for encoding video data according to claim 1 wherein the predetermined proper subset of transform coefficients is set adaptively to the image content of the image area.

**24.** A method for encoding video data according to claim 1 wherein the predetermined proper subset of transform coefficients is set adaptively to the image content of adjacent image areas.

**25.** A method for encoding video data according to claim 1 wherein the predetermined proper subset of transform coefficients is set adaptively to the image content of the image area in preceding frames.

**26.** A method for encoding video data according to claim 1 wherein the predetermined proper subset of transform coefficients is set according to prior knowledge of the result of the step of transforming (S20).

**27.** A method for encoding video data according to claim 1 further comprising the step of quantizing (S30) the transform coefficients by a predetermined quantization matrix, and
wherein the predetermined proper subset of transform coefficients is chosen according to prior knowledge of the result of the step of quantizing (S30).

**28.** A method for encoding video data according to claim 27 wherein the predetermined proper subset of transform coefficients is chosen according to the predetermined quantization matrix.

**29.** A method for encoding video data according to claim 27 wherein the predetermined proper subset of transform coefficients contains only those transform coefficients for which the corresponding element of the quantization matrix differs from a predetermined quantization value.

**30.** A method for encoding video data according to claim 26 or 27 wherein the chosen predetermined proper subset of transform coefficients comprises only coefficients that are not known to be zero by virtue of the prior knowledge.

**31.** A method for decoding video data, including the steps of
decoding (S110) encoded transform coefficients,
inverse scanning (S120) the decoded transform coefficients into a two-dimensional array of transform coefficients, and
inverse transforming (S140) the two-dimensional array of transform coefficients from the frequency domain into pixels of an image area,
**characterized in that**
the decoded transform coefficients form a predetermined proper subset of the two-dimensional array of transform coefficients, and
by the step of complementing the two-dimensional array of transform coefficients with a predetermined transform value.

**32.** A method for decoding video data according to claim 31 wherein the two-dimensional array of transform coefficients is divided into a predefined plurality of segments and the predetermined proper subset of the two-dimensional array of transform coefficients is set according to a predetermined subset of the plurality of segments.

**33.** A method for decoding video data according to claim 31 or 32 wherein the predetermined proper subset of the two-dimensional array of transform coefficients is altered according to a predefined sequence of proper subsets of the two-dimensional array of transform coefficients.

**34.** A method for decoding video data according to claim 31 or 32 wherein the predetermined proper subset of the two-dimensional array of transform coefficients is altered from frame to frame or from field to field or from image area to image according to a predefined sequence of proper subsets of the two-dimensional array of transform coefficients.

**35.** A method for decoding video data according to claim 33 or 34 wherein the predefined sequence of proper subsets of the two-dimensional array of transform coefficients is restarted whenever a predetermined type of frame is decoded.

**36.** A method for decoding video data according to any of claims 33-35 further comprising the step of obtaining signaling information (770) of an encoder, and wherein restarts of the predefined sequence of proper subsets of the two-dimensional array of transform coefficients are identified by the signaling information (770).

**37.** A method for decoding video data according to any of claims 33-36 further comprising the step of obtaining signaling information (770) of an encoder, and wherein the predefined sequence of proper subsets of the two-dimensional array of transform coefficients is identified by the signaling information (770).

**38.** A method for decoding video data according to claim 31 or 32 further comprising the step of obtaining signaling information (770) of an encoder, and wherein the predetermined proper subset of transform coefficients is identified by the signaling information (770).

**39.** A method for decoding video data according to claim 38 wherein the signaling information (770) defines the transform coefficients that have been encoded in the video data.

**40.** A method for decoding video data according to claim 38 or 39 wherein the signaling information (770) defines the order in which the transform coefficients have been encoded in the video data.

**41.** A method for decoding video data according to any of claims 38-40 wherein the signaling information (770) consists of an enumeration of transform coefficients that are part of the predetermined proper subset of transform coefficients.

**42.** A method for decoding video data according to any of claims 38-40 wherein the signaling information (770) consists of an enumeration of transform coefficients that are not part of the predetermined proper subset of transform coefficients.

**43.** A method for decoding video data according to any of claims 38-40 wherein the transform coefficients are divided into a predefined plurality of segments; and wherein the signaling information (770) consists of an enumeration of segments that correspond to the predetermined proper subset of transform coefficients.

**44.** A method for decoding video data according to any of claims 38-40 wherein the signaling information (770) consists of a reference to one of a plurality of predefined proper subsets of transform coefficients.

**45.** A method for decoding video data according to any of claims 38-40 wherein the signaling information (770) consists of a matrix of flag values, each flag value corresponding to one of the transform coefficients, said flag value equals a predetermined value if the corresponding transform coefficient is part of the predetermined proper subset of transform coefficients.

**46.** A method for decoding video data according to claim 45 wherein each of the flag values consists of one bit of information.

**47.** A method for decoding video data according to any of claims 36-46 wherein the signaling information (770) is obtained from the video data.

**48.** A method for decoding video data according to claim 38-46 wherein the signaling information (770) is obtained from the video data once for at least two image areas.

**49.** A method for decoding video data according to claim 38-46 wherein the signaling information (770) is obtained from the video data once for a predetermined number of pictures, frames, fields, slices, macro blocks or blocks.

**50.** A method for decoding video data according to any of claims 38-40 further comprising the step of inverse quantizing the transform coefficients by a predetermined quantization matrix, and wherein the signaling information (770) is derived from the predetermined quantization matrix.

**51.** A method for decoding video data according to claim 50 wherein transform coefficients that are not part of the predetermined proper subset of transform coefficients, are identified by the corresponding element of the quantization matrix being equal to a predetermined quantization value.

**52.** A method for decoding video data for decoding video data according to any of claims 31-51 wherein the step of complementing the two-dimensional array of transform coefficients comprises the substep of filling the two-dimensional array with the predetermined transform value, and
wherein inverse scanning the decoded transform coefficients comprises overwriting predetermined transform values in the two-dimensional array with the values of the inverse scanned transform coefficients.

**53.** A method for decoding video data for decoding video data according to any of claims 31-51 wherein the step of complementing the two-dimensional array of transform coefficients comprises the substep of complementing the decoded transform coefficients to form a complemented set of transform coefficients and wherein the complemented set of transform coefficients is inverse scanned into a two-dimensional array.

**54.** A method for decoding video data according to any of claims 31-53 wherein the predetermined transform value is zero.

**55.** A method according to any of claims 1 - 54, wherein said image area is a block of pixels, and wherein an input image is divided into a plurality of blocks of a uniform size.

**56.** An encoding apparatus for encoding video data, comprising:
a transformer (120) for transforming pixels of an image area into transform coefficients in the frequency domain,
a scanner for scanning transform coefficients, and
an encoder (190) for encoding the scanned transform coefficients
**characterized in that**
only a predetermined proper subset of transform coefficients is scanned and encoded.

**57.** An encoding apparatus according to claim 56 wherein the transform coefficients are divided into a predefined plurality of segments and the predetermined proper subset of transform coefficients is set according to a predetermined subset of the plurality of segments.

**58.** An encoding apparatus according to claim 56 or 57 wherein the predetermined proper subset of transform coefficients is altered according to a predefined sequence of proper subsets of transform coefficients.

**59.** An encoding apparatus according to claim 56 or 57 wherein the predetermined proper subset of transform coefficients is altered from frame to frame or from field to field or from image area to image area according to a predefined sequence of proper subsets of transform coefficients.

**60.** An encoding apparatus according to claim 58 or 59 wherein the predefined sequence of proper subsets of transform coefficients is restarted whenever a predetermined type of frame is encoded.

**61.** An encoding apparatus according to any of claims 58-60 further comprising signaling means (760) for signaling restarts of the predefined sequence of proper subsets of transform coefficients to a decoder.

**62.** An encoding apparatus according to any of claims 58-61 further comprising signaling means (760) for signaling the predefined sequence of proper subsets of transform coefficients to a decoder.

**63.** An encoding apparatus according to claim 56 or 57 further comprising signaling means (760) for signaling information (770) on the predetermined proper subset of transform coefficients to a decoder (740).

**64.** An encoding apparatus according to claim 63 wherein the signaling information (770) defines the transform coefficients that have been encoded in the video data.

**65.** An encoding apparatus according to claim 63 or 64 wherein the signaling information (770) defines the order in which the transform coefficients have been encoded in the video data.

**66.** An encoding apparatus according to any of claims 63-65 wherein the signaling information (770) consists of an enumeration of transform coefficients that are part of the predetermined proper subset of transform coefficients.

**67.** An encoding apparatus according to any of claims 63-65 wherein the signaling information (770) consists of an enumeration of transform coefficients that are not part of the predetermined proper subset of transform coefficients.

**68.** An encoding apparatus according to any of claims 63-65 wherein the transform coefficients are divided into a predefined plurality of segments; and wherein the signaling information (770) consists of an enumeration of segments that correspond to the predetermined proper subset of transform coefficients.

**69.** An encoding apparatus according to any of claims 63-65 wherein the signaling information (770) consists of a reference to one of a plurality of predefined proper subsets of transform coefficients.

**70.** An encoding apparatus according to any of claims 63-65 wherein the signaling information (770) consists of a matrix of flag values, each flag value corresponding to one of the transform coefficients, said flag value equals a predetermined value if the corresponding transform coefficient is part of the predetermined proper subset of transform coefficients.

**71.** An encoding apparatus according to claim 70 wherein each of the flag values consists of one bit of information.

**72.** An encoding apparatus according to any of claims 63-71 wherein the signaling means (760) is signaling the signaling information (770) whenever the predetermined proper subset of transform coefficients has been altered.

**73.** An encoding apparatus according to any of claims 63-72 wherein the signaling means (760) is signaling the signaling information (770) once for at least two image areas.

**74.** An encoding apparatus according to any of claims 63-72 wherein the signaling means (760) is signaling the signaling information (770) once for a predetermined number of pictures, frames, fields, slices, macro blocks or blocks.

**75.** An encoding apparatus according to any of claims 61-74 wherein the signaling information (770) is encoded in the video data.

**76.** An encoding apparatus according to claim 63 further comprising a quantizer for quantizing the transform coefficients by a predetermined quantization matrix, and wherein the predetermined quantization matrix comprises the signaling information (770).

**77.** An encoding apparatus according to claim 76 wherein elements of the quantization matrix, that correspond to transform coefficients that are not part of the predetermined proper subset of transform coefficients, equal a predetermined quantization value.

**78.** An encoding apparatus according to claim 56 wherein the predetermined proper subset of transform coefficients is set adaptively to the image content of the image area.

**79.** An encoding apparatus according to claim 56 wherein the predetermined proper subset of transform coefficients is set adaptively to the image content of adjacent image areas.

**80.** An encoding apparatus according to claim 56 wherein the predetermined proper subset of transform coefficients is set adaptively to the image content of the image area in preceding frames.

**81.** An encoding apparatus according to claim 56 wherein the predetermined proper subset of transform coefficients is set according to prior knowledge of the output of the transformer.

**82.** An encoding apparatus according to claim 56 further comprising a quantizer for quantizing the transform coefficients by a predetermined quantization matrix, and wherein the predetermined proper subset of transform coefficients is chosen according to prior knowledge of the output of the quantizer.

**83.** An encoding apparatus according to claim 82 wherein the predetermined proper subset of transform coefficients is chosen according to the predetermined quantization matrix.

**84.** An encoding apparatus according to claim 82 wherein the predetermined proper subset of transform coefficients contains only those transform coefficients for which the corresponding element of the quantization matrix differs from a predetermined quantization value.

**85.** An encoding apparatus according to claim 81 or 82 wherein the chosen predetermined proper subset of transform coefficients comprises only coefficients that are not known to be zero by virtue of the prior knowledge.

**86.** A decoding apparatus for decoding video data, comprising:
a decoder (310) for decoding encoded transform coefficients,
an inverse scanner for inverse scanning the decoded transform coefficients into a two-dimensional array of transform coefficients, and
an inverse transformer (320) for inverse transforming the two-dimensional array of transform coefficients from the frequency domain into pixels of an image area,
**characterized in that**
the decoded transform coefficients form a predetermined proper subset of the two-dimensional array of transform coefficients, and
a complementing means for complementing the two-dimensional array of transform coefficients with a predetermined transform value.

**87.** A decoding apparatus according to claim 86 wherein the two-dimensional array of transform coefficients is divided into a predefined plurality of segments and the predetermined proper subset of the two-dimensional array of transform coefficients is set according to a predetermined subset of the plurality of segments.

**88.** A decoding apparatus according to claim 86 or 87 wherein the predetermined proper subset of the two-dimensional array of transform coefficients is altered according to a predefined sequence of proper subsets of the two-dimensional array of transform coefficients.

**89.** A decoding apparatus according to claim 86 or 87 wherein the predetermined proper subset of the two-dimensional array of transform coefficients is altered from frame to frame or from field to field or from image area to image according to a predefined sequence of proper subsets of the two-dimensional array of transform coefficients.

**90.** A decoding apparatus according to claim 88 or 89 wherein the predefined sequence of proper subsets of the two-dimensional array of transform coefficients is restarted whenever a predetermined type of frame is decoded.

**91.** A decoding apparatus according to any of claims 88-90 further comprising a signaling means (780), and wherein restarts of the predefined sequence of proper subsets of the two-dimensional array of transform coefficients are identified by signaling information (770) obtained by the signaling means (780).

**92.** A decoding apparatus according to any of claims 88-91 further comprising a signaling means (780), and wherein the predefined sequence of proper subsets of the two-dimensional array of transform coefficients is identified by signaling information (770) obtained by the signaling means (780).

**93.** A decoding apparatus according to claim 86 or 87 further comprising a signaling means (780), and wherein the predetermined proper subset of transform coefficients is identified by signaling information (770) obtained by the signaling means (780).

**94.** A decoding apparatus according to claim 93 wherein the signaling information (770) defines the transform coefficients that have been encoded in the video data.

**95.** A decoding apparatus according to claim 93 or 94 wherein the signaling information (770) defines the order in which the transform coefficients have been encoded in the video data.

**96.** A decoding apparatus according to any of claims 93-95 wherein the signaling information (770) consists of an enumeration of transform coefficients that are part of the predetermined proper subset of transform coefficients.

**97.** A decoding apparatus according to any of claims 93-95 wherein the signaling information (770) consists of an enumeration of transform coefficients that are not part of the predetermined proper subset of transform coefficients.

**98.** A decoding apparatus according to any of claims 93-95 wherein the transform coefficients are divided into a predefined plurality of segments; and wherein the signaling information (770) consists of an enumeration of segments that correspond to the predetermined proper subset of transform coefficients.

**99.** A decoding apparatus according to any of claims 93-95 wherein the signaling information (770) consists of a reference to one of a plurality of predefined proper subsets of transform coefficients.

**100.** A decoding apparatus according to any of claims 93-95 wherein the signaling information (770) consists of a matrix of flag values, each flag value corresponding to one of the transform coefficients, said flag value equals a predetermined value if the corresponding transform coefficient is part of the predetermined proper subset of transform coefficients.

**101.** A decoding apparatus according to claim 100 wherein each of the flag values consists of one bit of information.

**102.** A decoding apparatus according to any of claims 91-101 wherein the signaling means (780) obtains the signaling information (770) from the video data.

**103.** A decoding apparatus according to claim 93-101 wherein the signaling means (780) obtains the signaling information (770) from the video data once for at least two image areas.

**104.** A decoding apparatus according to claim 93-101 wherein the signaling means (780) obtains the signaling information (770) from the video data once for a predetermined number of pictures, frames, fields, slices, macro blocks or blocks.

**105.** A decoding apparatus according to any of claims 93-95 further comprising an inverse quantizer for inverse quantizing the transform coefficients by a predetermined quantization matrix, and wherein the signaling information (770) is derived from the predetermined quantization matrix.

**106.** A decoding apparatus according to claim 105 wherein transform coefficients that are not part of the predetermined proper subset of transform coefficients, are identified by the corresponding element of the quantization matrix being equal to a predetermined quantization value.

**107.** A decoding apparatus for decoding video data according to any of claims 86-106 wherein the complementing means fills the two-dimensional array with the predetermined transform value, and
wherein the inverse scanner is overwriting the predetermined transform value in the two-dimensional array with the values of the inverse scanned transform coefficients.

**108.** A decoding apparatus for decoding video data according to any of claims 86-106 wherein the complementing means complements the decoded transform coefficients with the predetermined transform value to form a complemented set of transform coefficients, and
wherein the inverse scanner is inverse scanning the complemented set of transform coefficients into the two-dimensional array.

**109.** A decoding apparatus according to any of claims 86-108 wherein the predetermined transform value is zero.

**110.** An apparatus according to any of claims 56-110, wherein said image area is a block of pixels, and wherein an input image is divided into a plurality of blocks of a uniform size.
